# EUROPEAN PATENT APPLICATION

(11) **EP 0 803 507 A2**
(43) Date of publication of application: **29.10.1997**
(21) Application number: 97106883.8
(22) Date of filing: 25.04.1997
(51) Int. Cl.: C07F 7/12, C07F 7/14, C07F 7/18, C07F 7/08

(54) **Polymerization inhibitor for acrylic-functional organo-silicon compounds**

(30) Priority: 26.04.1996 JP 131431/96; 26.04.1996 JP 131432/96
(71) Applicant: Dow Corning Toray Silicone Company Limited, Tokyo (JP)
(72) Inventor: Mikami, Ryuzo, Dow Corning Toray Silicone Co. Ltd., Chiba Prefecture (JP); Okawa, Tadashi Dow Corning Toray Silicone Co. Ltd., Chiba Prefecture (JP)
(74) Representative: Fleischer, Sabine, Dr.

(57) **Abstract**

Use of a polymerization inhibitor described by formula 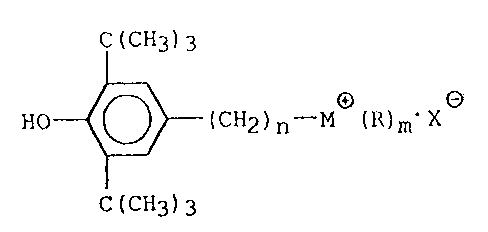 where n is 0 or 1; M is an atom selected from the group consisting of N, P, As, Sb, O, S, Se, Sn, and I; R is a monovalent hydrocarbon group or hydrogen atom; m is 1, 2, or 3; and X is a conjugate base of an organic acid or inorganic acid, to inhibit the polymerization of acrylic-functional organosilicon compounds and a method to make high-purity acryloxy- or methacryloxy-functional organosilicon compounds in high yields by inhibiting gelation of the reaction product during preparation. The method comprises (A) reacting an acrylate or methacrylate ester of an alcohol comprising an aliphatically unsaturated bond or a phenol comprising an aliphatically unsaturated bond with a (B) SiH-functional silicon compound in the presence of (C) a hydrosilylation reaction catalyst and (D) the polymerization inhibitor. The present method can further comprise distillation of the reaction mixture resulting from the reaction component (A) and (B) in the presence of component (D).

## Description

This invention relates to a polymerization inhibitor that can inhibit the polymerization of acrylic-functional organosilicon compounds (acrylic-functional silanes).

This invention also relates to methods using this inhibitor for the preparation of organosilicon compounds that contain the acryloxy or methacryloxy group (hereinafter abbreviated as (meth)acryloxy-functional organosilicon compounds). More particularly, this invention relates to an efficient method for the high-yield synthesis of very pure (meth)acryloxy-functional organosilicon compounds in which gelation of the reaction product during the production process is inhibited.

Acrylic-functional silanes, e.g., acryloxy group-containing silanes and methacryloxy group-containing silanes, readily react with radical-polymerizable monomers, such as methyl methacrylate and styrene, and as a consequence are used as starting materials for copolymers derived from these monomers and as modifiers for polymers obtained from these monomers.

Acrylic-functional silanes can be prepared by an addition reaction between a SiH-functional halosilane and the acrylate or methacrylate ester of an alcohol or phenol that contains an aliphatically unsaturated bond. The desired acrylic-functional silane is then isolated from the resulting mixture by distillative purification, as described in Japanese Patent Publication Kokai 5-301881 (1993). However, this addition reaction and isolation by distillative purification has been encumbered by severe difficulties because compounds of this type readily polymerize upon heating and as a result can become highly polymerized during the reaction and distillation stages. This problem has made it quite difficult to obtain high-purity acrylic-functional silanes in high yields. Therefore it is necessary to run the addition reaction in these methods at a reaction temperature at which thermal polymerization will not occur. However, this type of temperature control is quite difficult and the reaction product often ends up becoming highly polymerized and gelled.

The addition of a hindered phenol, amine compound, or quinone compound to the reaction system has also been proposed as a method for inhibiting the polymerization and gelation of acrylic-functional silanes. For example, Japanese Patent Publication Kokai 7-25907 (1995) describes a substantial improvement in thermal stability by the addition of 2,6-di-tert-butyl-4-hydroxymethylphenol to a crude mixture prepared from γ-methacryloxypropyltrichlorosilane and methanol whose main component is γ-methacryloxypropyltrimethoxysilane. This inhibitor, however, does not provide a complete inhibition of gelation during the addition reaction between a SiH-functional halosilane and the acrylate or methacrylate ester of an aliphatically unsaturated alcohol or phenol. In addition, Japanese Patent Publication Kokai 5-186478 (1993) has proposed the use of N,N-dialkylaminomethylenephenol as a polymerization inhibitor. This inhibitor performs relatively well in terms of inhibiting the polymerization of acrylic-functional silanes and halosilanes. However, it acts as a catalyst poison for the platinum catalysts used as the addition-reaction catalyst in the preparation of these silanes by the above-described addition reaction, with the result that large amounts of platinum catalyst must be employed in order to complete the reaction.

The inventors have already proposed a method in which metal halide is added as a polymerization inhibitor to the distillative purification of the reaction mixture afforded by the above addition reaction (Japanese Patent Publication Kokai 5-271248 (1990)). This method provides the desired (meth)acryloxy-functional organosilicon compound in high yields without the occurrence of gelation during separation by distillation. Unfortunately, since this type of metal halide is easily reduced by silicon-bonded hydrogen to give either a lower valent metal halide or the metal itself, this method cannot be applied to the inhibition of polymerization or gelation during the addition reaction.

The inventors achieved the present invention as a result of extensive investigations directed to solving the problems described above. Specifically, the object of the present invention is to provide a novel polymerization inhibitor that can inhibit the polymerization of acrylic-functional silane during their synthesis, purification, and storage.

The object is met by the use of a polymerization inhibitor described by formula 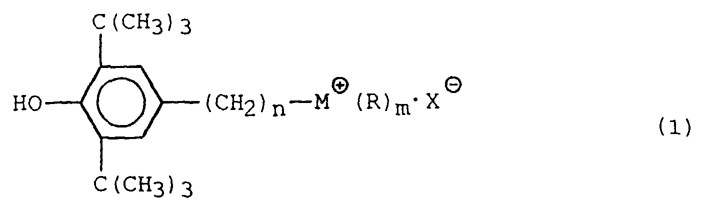 where n is 0 or 1; M is an atom selected from the group consisting of N, P, As, Sb, O, S, Se, Sn, and I; R is a monovalent hydrocarbon group or hydrogen atom; m is 1, 2, or 3; and X is a conjugate base of an organic acid or inorganic acid, to inhibit the polymerization of acrylic-functional organosilicon compounds.

The polymerization inhibitors according to the present invention have an inhibiting effect superior to that of known polymerization inhibitors. The inhibiting effect is achieved by forming a mixture of the acrylic-functional organosilicon compound(s) and the inhibitor.

The inventors have discovered that these inhibitors provide a substantial stabilization of the reaction mixture during the addition reaction of the acrylate or methacrylate ester of an aliphatically unsaturated alcohol or phenol. These compounds as a result act to inhibit gelation during the addition reaction. Moreover, these compounds exert their effects without inhibiting the addition reaction. Thus, a preferred embodiment of the present invention is directed to the use of the inhibitor in a high-yield method for the preparation of high-purity (meth)acryloxy-functional organosilicon compounds in which gelation of the reaction mixture is inhibited.

In formula (1), R can be a hydrogen atom or a monovalent hydrocarbon group, and examples of the latter are alkyl groups such as methyl, ethyl, and propyl; alkenyl groups such as vinyl, allyl, and butenyl; aryl groups such as phenyl, tolyl, and xylyl; and aralkyl groups such as phenylethyl and diphenylmethyl. Methyl and hydrogen are preferred for R.

In formula (1), M is an atom selected from the group consisting of N, P, As, Sb, O, S, Se, Sn, and I. In formula (1), while m in general has a value of 1, 2, or 3, m will be 3 when M is N, P, As, or Sb; 2 when M is O, S, Se, or Sn; and 1 when M is I. In formula (1), X refers to the conjugate base of an organic or inorganic acid and is exemplified by halogen ions, which are the conjugate bases of hydrogen halides such as hydrogen chloride and hydrogen bromide; by the conjugate bases of carboxylic acids such as acetic acid, propionic acid, and acrylic acid; and by the conjugate bases of sulfuric acid, sulfonic acid, and phosphoric acid.

The compounds described by formula (1) are exemplified by compounds with the following molecular structures, in which R and X are as defined above.

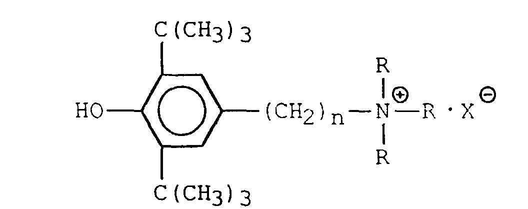

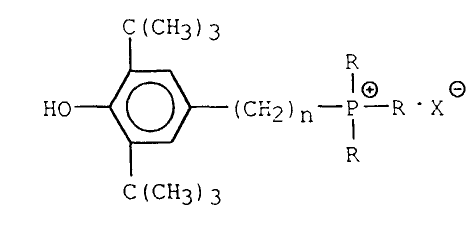

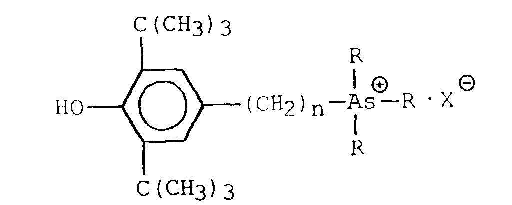

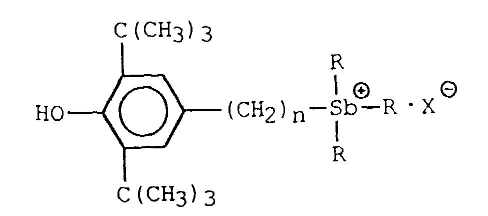

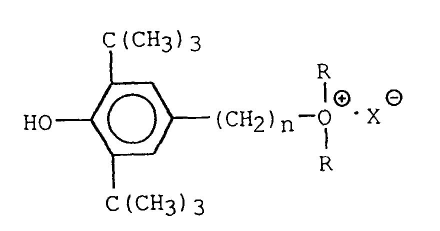

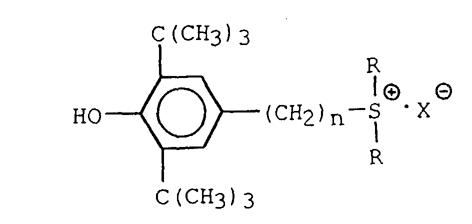

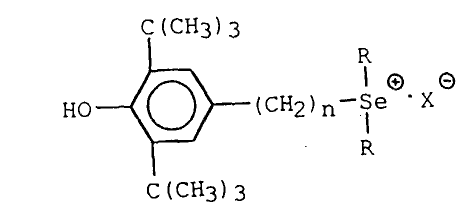

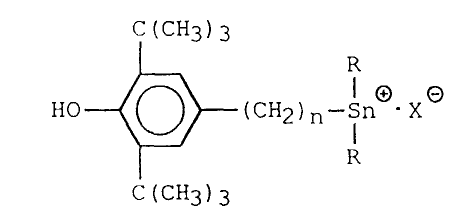

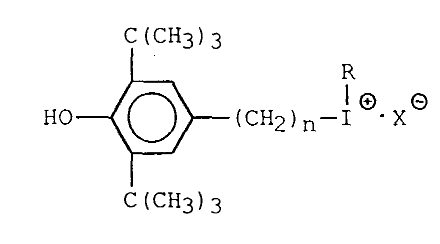

The polymerization inhibitors according to the present invention have chemical structures as defined above. Polymerization inhibitors with the following chemical structures are preferred. R in the following chemical structures is the hydrogen atom or a monovalent hydrocarbon group as described above.

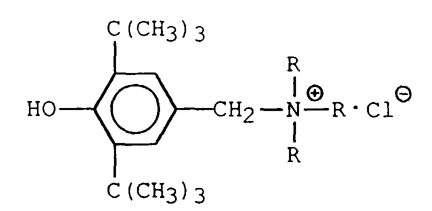

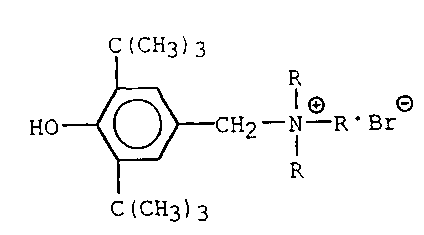

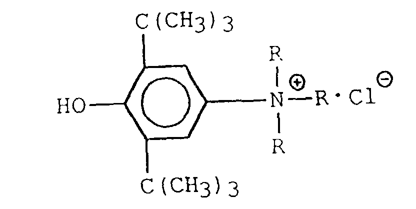

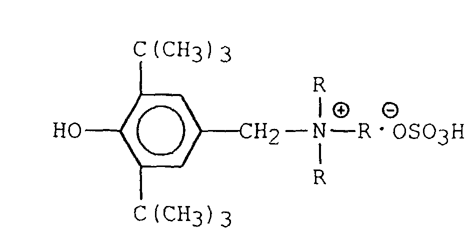

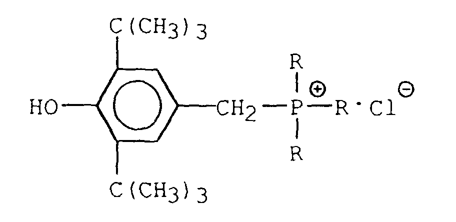

Polymerization inhibitors according to the present invention are easily synthesized by well-known methods in which an organic acid or inorganic acid or organic halide is reacted with the corresponding substituted or unsubstituted phenol-containing Lewis base.

Acrylic-functional silanes to which the polymerization inhibitor may be applied are exemplified by methacryloxy-functional silanes such as 3-methacryloxypropyldimethylchlorosilane, 3-methacryloxypropylmethyldichlorosilane, and 3-methacryloxypropyltrichlorosilane, and by acryloxy-functional silanes such as 3-acryloxypropyldimethylchlorosilane, 3-acryloxypropylmethyldichlorosilane, and 3-acryloxypropyltrichlorosilane.

The polymerization inhibitor may be used in a method comprising:
(A) reacting an acrylate or methacrylate ester of an alcohol comprising an aliphatically unsaturated bond or a phenol comprising an aliphatically unsaturated bond with a
(B) SiH-functional silicon compound in the presence of
(C) a hydrosilylation reaction catalyst and (D) the polymerization inhibitor as described above.

The present method can further comprise distillation of the reaction mixture resulting from the reaction of component (A) and (B) in the presence of component (D). The presence of component (D) during the distillation process prevents polymerization of the (meth)acryloxy-functional organosilicon product during the distillation process.

Component (A) used in the present method is the acrylate or methacrylate ester of an alcohol that contains an aliphatically unsaturated bond or a phenol that contains an aliphatically unsaturated bond. The acrylate esters are exemplified by allyl acrylate, hexenyl acrylate, allyloxyethyl acrylate, and 4-vinylphenyl acrylate. The methacrylate esters are exemplified by allyl methacrylate, hexenyl methacrylate, allyloxyethyl methacrylate, and 4-vinylphenyl methacrylate.

No specific restrictions apply to the SiH-functional silicon compound (B) other than that the boiling point of the product afforded by the addition reaction should fall in a temperature range at which distillation can be carried out. The organosilicon compound is exemplified by trichlorosilane, methyldichlorosilane, dimethylchlorosilane, trimethoxysilane, methyldimethoxysilane, dimethylmethoxysilane, pentamethyldisiloxane, and 1,1,3,3-tetramethyldisiloxane.

The hydrosilylation reaction catalyst employed as component (C) in the present method preferably comprises a transition metal from Group VIII of the Periodic Table, among which platinum catalysts are the most preferred. These platinum catalysts are exemplified by alcohol solutions of chloroplatinic acid, platinum-olefin complexes, and complexes of platinum and vinyl-functional siloxane.

The preferred polymerization inhibitors (D) used in the present method are the same as described above.

Component (D) is preferably added to the present method at from 0.001 to 10 weight%, based on the total weight of components (A) to (C).

The present method can be run with or without solvent. Useable solvents include aromatic hydrocarbons such as benzene, toluene, and xylene; aliphatic hydrocarbons such as hexane and heptane; ethers such as tetrahydrofuran and diether ether; ketones such as acetone and methyl ethyl ketone; and esters such as ethyl acetate and butyl acetate.

The present method can be run at room temperature, but is preferably run at temperatures of at least 30°C in order to obtain good reaction rates. Since (meth)acryloxy-functional organosilicon compounds readily polymerize and gel at high temperatures, the reaction temperature preferably does not exceed 100°C, more preferably the reaction temperature is in the range from 30°C to 100°C, and even more preferably the reaction temperature is in the range from 50°C to 95°C.

Distillation can be run directly after completion of this addition reaction without further intervention, but the hindered phenols, amine compounds, quinones, and oxygen already known as radical polymerization inhibitors can also be added and used in combination with the polymerization inhibitor according to the present invention. Moreover, the addition of a metal halide as proposed by the inventors in Japanese Patent Publication Kokai 2-71248 will provide additional stabilization of the reaction system and make possible the high-yield recovery of the target (meth)acryloxy-functional organosilicon compound by distillation in a vacuum without the production of a gel by-product. These metal halides are specifically exemplified by the chlorides, bromides, and iodides of chromium, cobalt, nickel, germanium, zinc, tin, mercury, copper, iron, palladium, tungsten, and silver, among which cupric chloride is most preferred. The general range of addition for the metal halide is from 0.01 to 10 weight% of the overall weight of the reaction mixture, but its addition is not specifically restricted as long as its addition is capable of inhibiting polymerization.

The presence of polymerization inhibitor (D) in the addition reaction between (A) the acrylate or methacrylate ester of an aliphatically unsaturated alcohol of phenol and (B) SiH-functional organosilicon compound catalyzed by (C) hydrosilylation catalyst, or in the distillation of the reaction mixture inhibits the polymerization or gelation of component (A) and product (meth)acryloxy-functional organosilicon compounds.

The invention will be explained in greater detail below through working examples, but the invention is not limited to these examples.

Synthesis Example 1. A clear mixture comprising 1 g (3.8 mmol) 2,6-di-tert-butyl-4-dimethylaminomethylphenol, 0.76 g (8.4 mmol) trimethylsilanol, and 30 mL toluene was formed. Then, 0.46 g (4.2 mmol) of trimethylchlorosilane was added dropwise to this mixture while stirring forming a white precipitate. After stirring for 30 minutes at room temperature, the white precipitate was filtered off, washed with toluene, and dried under vacuum at 80°C for 1 hour to give 0.7 g of the white precipitate. Analysis of the white precipitate by nuclear magnetic resonance analysis (NMR) and infrared absorption analysis (IR) confirmed it to be 3,5-di-tert-butyl-4-hydroxyphenylmethyldimethylammonium chloride as described by formula

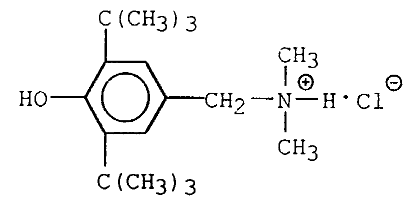

Example 1. The following were introduced into and mixed in a 30-mL stopper-equipped glass bottle: 10 g 3-methacryloxypropyldimethylchlorosilane, 0.5 g dimethylchlorosilane, and 0.038 g (0.127 mmol) of the 3,5-di-tert-butyl-4-hydroxyphenylmethyldimethylammonium chloride as described in Synthesis Example 1. This was followed by the introduction of a platinum catalyst in the form of a complex of chloroplatinic acid and 1,3-divinyltetramethyldisiloxane. The platinum catalyst was added in sufficient quantity to provide 10 ppm platinum metal based on the 3-methacryloxypropyldimethylchlorosilane. The bottle was then stopped after purging with nitrogen. The dimethylchlorosilane and platinum catalyst were added to promote polymerization of the 3-methacryloxypropyldimethylchlorosilane, as already described by the inventors in Japanese Patent Application Kokai Number Hei 6-107715 (107,715/1994). The glass bottle was held in a temperature controlled oil bath at 150°C in order to measure the gelation time of the content. As used herein, the gelation time refers to the time required for the content to lose its fluidity and thereby gel. The results are reported in Table 1.

Comparative Examples 1 to 6. The gelation time was measured as described for Example 1, but in each case using 0.127 mmol of the polymerization inhibitor specified in Table 1 in place of the 3,5-di-tert-butyl-4-hydroxyphenylmethyldimethylammonium chloride. These results are also reported in Table 1.

Example 2. The following were introduced into and mixed in a 30-mL stopper-equipped glass bottle: 10 g 3-methacryloxypropyldimethylchlorosilane, 0.5 g dimethylchlorosilane, and 0.076 g (0.254 mmol) of the 3,5-di-tert-butyl-4-hydroxyphenylmethyldimethylammonium chloride is described in Synthesis Example 1. This was followed by the introduction of a platinum catalyst in the form of a complex of chloroplatinic acid and 1,3-divinyltetramethyldisiloxane. The platinum catalyst was added in sufficient quantity to provide 10 ppm platinum metal based on the 3-methacryloxypropyldimethylchlorosilane. The bottle was then sealed with a stopper after purging with nitrogen. The dimethylchlorosilane and platinum catalyst were added to promote polymerization of the 3-methacryloxypropyldimethylchlorosilane, as proposed by the inventors in Japanese Patent Application Laid Open Kokai Number Hei 6-107715. The glass bottle was held in a temperature controlled oil bath at 150°C in order to measure the gelation time of the content. 30 hours were required for the content to lose its fluidity and become a gel.

**Table 1.**

| | polymerization inhibitor | addition (mmol) | gelation time (hours) |
|---|---|---|---|
| Example 1 | 3,5-di-tert-butyl-4-hydroxyphenylmethyldimethylammonium chloride | 0.127 | 20 |
| Comparative Example 1 | 3,5-di-tert-butyl-4-hydroxyanisole | 0.127 | 0.25 |
| Comparative Example 2 | 2,6-di-tert-butyl-4-methylphenol | 0.127 | 0.5 |
| Comparative Example 3 | 3,5-di-t-butyl-4-hydroxybenzaldehyde | 0.127 | 3 |
| Comparative Example 4 | 2,6-di-tert-butyl-4-hydroxymethylphenol | 0.127 | 3.5 |
| Comparative Example 5 | 2,6-di-tert-butyl-4-dimethylaminomethylphenol | 0.127 | 12.5 |
| Comparative Example 6 | benzyldimethylammonium chloride | 0.127 | < 0.25 |

Synthesis Example 2. A mixture comprising 20 g (76 millimoles) 2,6-di-tert-butyl-4-dimethylaminomethylphenol, 15.1 g (168 millimoles) trimethylsilanol, and 140 mL toluene was formed. Then, 9.2 g (84 millimoles) trimethylchlorosilane were added dropwise to this mixture forming a white precipitate. After stirring for 30 minutes at room temperature, the white precipitate was filtered off, washed with toluene, and dried under vacuum at 80°C for 3 hours to give 22.5 g of the white precipitate. Analysis of the white precipitate by nuclear magnetic resonance analysis (NMR) and infrared absorption analysis (IR) confirmed it to be 3,5-di-tert-butyl-4-hydroxyphenylmethyldimethylammonium chloride as described by formula:

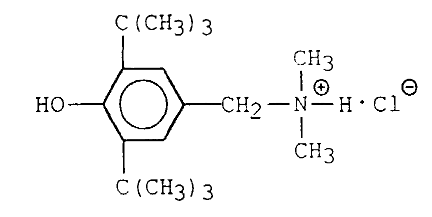

Example 3. 100 g (794 millimoles) Allyl methacrylate and 0.1 g of the 3,5-di-tert-butyl-4-hydroxyphenylmethyldimethylammonium chloride whose synthesis is described in Synthesis Example 1 were introduced into a stirrer-equipped four-neck flask. A platinum/1,3-divinyltetramethyldisiloxane complex was then added to the flask in sufficient quantity to give 20 ppm platinum metal relative to the weight of the allyl methacrylate. After heating to 90°C under a nitrogen blanket, a small amount of dimethylchlorosilane was added dropwise. After confirmation of initiation of the reaction, 68.2 g (722 millimoles) of dimethylchlorosilane were added dropwise while maintaining the reaction temperature at 85°C to 95°C by cooling. Stirring was carried out for 30 minutes at 80°C after completion of the addition. 0.1 g 2,6-Di-tert-butyl-4-methylphenol was added followed by distillation at 5 mm Hg. The fraction distillating off at 92°C to 105°C was collected. This fraction, identified as 3-methacryloxypropyldimethylchlorosilane, weighed 126.1 g (yield = 79%).

Example 4. 2,000 g (15.9 moles) Allyl methacrylate and 3.0 g of the 3,5-di-tert-butyl-4-hydroxyphenylmethyldimethylammonium chloride whose synthesis is described in Synthesis Example 1 were introduced into a stirrer-equipped four-neck flask. A platinum/1,3-divinyltetramethyldisiloxane complex was then added to the flask in sufficient quantity to give 20 ppm platinum metal relative to the weight of the allyl methacrylate. After heating to 80°C while bubbling in nitrogen containing 2% oxygen at the rate of 0.1 L/minute, a small amount of dimethylchlorosilane was added dropwise. After confirmation of initiation of the reaction, 1,364 g (14.4 moles) dimethylchlorosilane were added dropwise while maintaining the reaction temperature at 75°C to 80°C by cooling. Stirring was carried out for 1 hour at 75°C after completion of the addition. 30 g Of cupric chloride and 2 g of 2,6-di-tert-butyl-4-methylphenol were added to the resulting reaction mixture followed by distillation at 5 mm Hg. The fraction distilling off at 90°C to 110°C was collected. This fraction, identified as 3-methacryloxypropyldimethylchlorosilane, weighed 2,323 g (yield = 73%). The residue was 180 g of a low-viscosity liquid.

Comparative Example 7. An addition reaction was run as in Example 2, but in this case using 0.8 g phenothiazine and 8 g hydroquinone monomethyl ether as polymerization inhibitors instead of the 3.0 g 3,5-di-tert-butyl-4-hydroxyphenylmethyldimethylammonium chloride. The reaction was also run under air in this comparative example. The reaction mixture lost its fluidity and gelled by the time the addition of the dimethylchlorosilane to the reaction was completed.

Comparative Example 8. 50 g (397 millimoles) Allyl methacrylate was placed in a stirrer-equipped four-neck flask and dry air was bubbled through the allyl methacrylate for 30 minutes. This was followed by the admixture under a nitrogen blanket of 0.1 g phenothiazine and sufficient platinum/1,3-divinyltetramethyldisiloxane complex to provide 20 ppm platinum metal relative to the weight of the allyl methacrylate. The mixture was heated to 75°C and a small amount of dimethylchlorosilane was added dropwise. After initiation of the reaction had been confirmed, 37.5 g (397 millimoles) dimethylchlorosilane were added dropwise while the reaction temperature was maintained at 65°C to 75°C by cooling. Stirring was continued at 60°C for 1 hour after the completion of addition. 0.88 g Triethylamine hydrochloride was then added to this reaction mixture and the mixture distilled at 5 mm Hg. The obtained fraction, identified as 3-methacryloxypropyldimethylchlorosilane, weighed 31.8 g (yield = 36%). The residue had lost its fluidity and had gelled.

## Claims

1. Use of a polymerization inhibitor described by formula 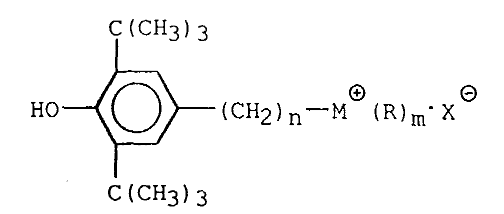 where n is 0 or 1; M is an atom selected from the group consisting of N, P, As, Sb, O, S, Se, Sn, and I; R is a monovalent hydrocarbon group or hydrogen atom; m is 1, 2, or 3; and X is a conjugate base of an organic acid or inorganic acid,
to inhibit the polymerization of acrylic-functional organosilicon compounds.

2. Use according to claim 1, where the polymerization inhibitor is described by formula 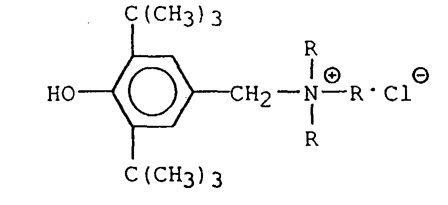 where R is a monovalent hydrocarbon group or hydrogen atom.

3. Use according to claim 1, where the polymerization inhibitor is described by formula

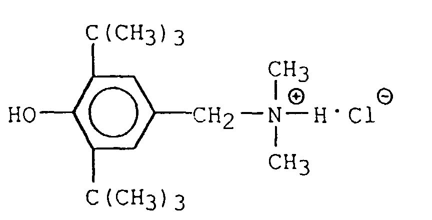

4. Use according to claim 1, where m is 3 and M is selected from the group consisting of N, P, As, and Sb.

5. Use according to claim 1, where m is 2 and M is selected from the group consisting of O, S, Se, and Sn.

6. Use according to claim 1, where m is 1 and M is I.

7. Use according to any of claims 1 to 6, where the acrylic-functional organosilicon compound is an acryloxy- or methacryloxy-functional organosilicon compound.

8. Use according to claim 7, where the acrylic-functional organosilicon compound is 3-methacryloxypropyldimethylchlorosilane.

9. Use according to any of claims 1 to 8 during the synthesis, purification and storage of the acrylic-functional organosilicon compounds.

10. A method for preparation of acryloxy- or methacryloxy-functional organosilicon compounds comprising
(A) reacting an acrylate or methacrylate ester of an alcohol comprising an aliphatically unsaturated bond or a phenol comprising an aliphatically unsaturated bond with a
(B) SiH-functional silicon compound in the presence of
(C) a hydrosilylation reaction catalyst and (D) a polymerization inhibitor described by formula 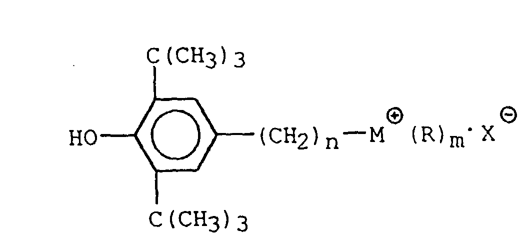
where n is 0 or 1; M is an atom selected from the group consisting of N, P, As, Sb, O, S, Se, Sn, and I; R is a monovalent hydrocarbon group or hydrogen atom; m is 1, 2, or 3; and X is a conjugate base of an organic acid or inorganic acid.

11. A method according to claim 10, where component (A) comprises an acrylate ester selected from the group consisting of allyl acrylate, hexenyl acrylate, allyloxyethyl acrylate, and 4-vinylphenyl acrylate.

12. A method according to claim 10, where component (A) comprises a methacrylate ester selected from the group consisting of allyl methacrylate, hexenyl methacrylate, allyloxyethyl methacrylate, and 4-vinylphenyl methacrylate.

13. A method according to claim 10, where the SiH-functional silicon compound is selected from the group consisting of trichlorosilane, methyldichlorosilane, dimethylchlorosilane, trimethoxysilane, methyldimethoxysilane, dimethylmethoxysilane, pentamethyldisiloxane, and 1,1,3,3-tetramethyldisiloxane.

14. A method according to claim 10, where the hydrosilylation catalyst is a platinum catalyst selected from the group consisting of an alcohol solution of chloroplatinic acid, platinum-olefin complexes, and complexes of platinum and vinyl-functional siloxane.

15. A method according to claim 10, where the polymerization inhibitor is selected from the group described by formulas

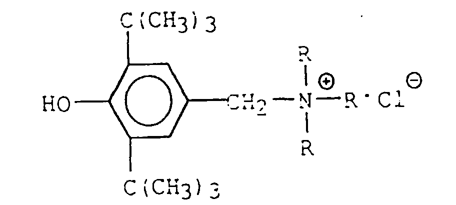

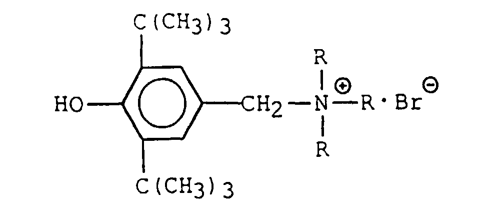

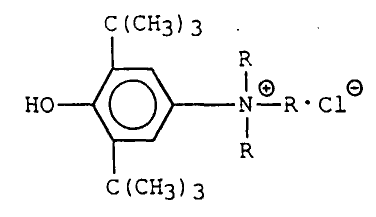

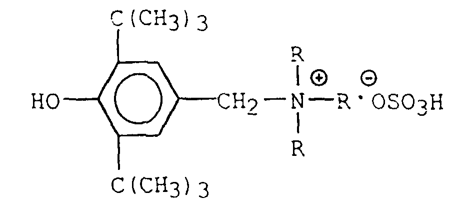

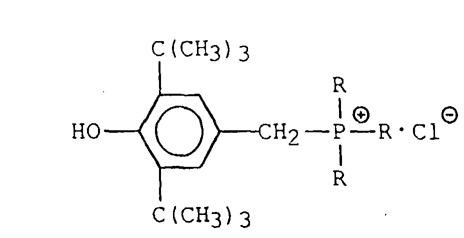

16. A method according to claim 10, where the acrylate is allyl acrylate and the SiH-functional organosilicon compound is dimethylchlorosilane.

17. A method according to claim 10 further comprising distillating the reaction product of component (A) and (B) in the presence of component (D) thereby recovering an acryloxy- or methacryloxy-functional organosilicon compound.

18. A method according to claim 1, where the polymerization inhibitor is described by formula
